## Europäisches Patentamt

## European Patent Office

## Office européen des brevets

(11) Numéro de publication: **0 168 754**
**B1**

(12)

# FASCICULE DE BREVET EUROPEEN

(45) Date de publication du fascicule du brevet:
**28.12.88**

(51) Int. Cl.⁴: **B 60 C 15/05**

(21) Numéro de dépôt: **85108504.3**

(22) Date de dépôt: **09.07.85**

(54) Enveloppe de pneumatique à carcasse radiale comportant deux tringles par bourrelet.

(30) Priorité: **19.07.84 FR 8411750**

(43) Date de publication de la demande:
**22.01.86 Bulletin 86/4**

(45) Mention de la délivrance du brevet:
**28.12.88 Bulletin 88/52**

(84) Etats contractants désignés:
**AT BE CH DE FR GB IT LI LU NL SE**

(56) Documents cités:
**EP-A- 0 077 161**
**EP-A- 0 129 675**
**FR-A- 1 127 521**
**FR-A- 2 346 171**
**US-A- 1 349 902**
**US-A- 1 403 091**
**US-A- 1 548 370**
**US-A- 4 029 137**

(73) Titulaire: **MICHELIN & CIE (Compagnie Générale des Etablissements Michelin) Société dite:, 4 rue du Terrail, F-63000 Clermont-Ferrand (FR)**

(72) Inventeur: **Masclaux, Pierre, Rue de la Chave, Enval F-63530 Volvic (FR)**

(74) Mandataire: **Renaudie, Jacques et al, Michelin & Cie Service K. Brevets, F-63040 Clermont-Ferrand Cédex (FR)**

## Description

La présente invention concerne les enveloppes de pneumatiques pour véhicules de tourisme. Plus particulièrement, elle se rapporte aux bourrelets des enveloppes à carcasse radiale, destinées à être utilisées sans chambre à air indépendante.

Pour des raisons de sécurité, de telles enveloppes de pneumatiques sont montées sur un type de jante spécialement adapté. Ces jantes ont la particularité d'être munies, au moins du côté extérieur du véhicule, entre la gorge circonférentielle profonde destinée au montage et le siège du bourrelet, d'une saillie circonférentielle formant butée destinée à retenir la pointe du bourrelet et donc à éviter que le bourrelet ne puisse tomber dans la gorge de montage. Ces saillies sont communément appelées «humps». A titre illustratif, les normes de l'ETRTO en donnent différentes formes et dimensions. La chute accidentelle du bourrelet dans la gorge de montage est appelée «décoincement», phénomène particulièrement grave car il s'ensuit une perte de contrôle du véhicule, l'ensemble pneumatique étant dépourvu de pouvoir directeur.

L'efficacité de tels ensembles pneumatiques (jante avec saillie + enveloppe sans chambre à air indépendante), se révèle parfois insuffisante. L'amélioration constante des performances des véhicules, les vitesses de passage en virage sans cesse plus élevées conduisent à des sollicitations très importantes des bourrelets. Dans un virage de faible rayon de courbure négocié avec une enveloppe de pneumatique insuffisamment gonflée du côté extérieur au virage, la saillie ne peut empêcher que le bourrelet extérieur quitte son siège pour tomber dans la gorge centrale.

On connaît de nombreuses propositions visant à retarder l'apparition de ce phénomène. Elles concernent en grande majorité des ensembles jante-enveloppe de pneumatique. L'utilisation de ces dispositifs interdit de dissocier enveloppe et jante, ce qui présente un inconvénient certain. Parmi ces dispositifs, on peut citer la demande de brevet FR-A 2 378 643: le bourrelet doit comporter une pointe de gomme qui s'engage dans une gorge spécialement prévue sur le siège de bourrelet.

On connaît aussi quelques propositions visant à lutter contre le décoincement en ne modifiant que l'enveloppe de pneumatique qui peut donc être utilisée avec une jante usuelle du type à saillie. On peut citer par exemple le brevet FR-A 2 346 171. Il est possible d'augmenter le blocage du bourrelet sur son siège en diminuant le diamètre du bourrelet par rapport au diamètre nominal de jante et/ou en augmentant l'angle que fait la surface tronconique inférieure du bourrelet par rapport à l'axe de rotation. Par exemple, le brevet FR-A 1 536 469 prévoit d'incliner la face inférieure du bourrelet de 10°, tout en conservant l'angle normalisé de 5° pour le siège de bourrelet sur la jante, et de réduire le diamètre du bourrelet de 0,3% par rapport au diamètre du siège. Pour augmenter l'efficacité du blocage du bourrelet, la demande de brevet FR-A 2 548 970 issue de la demanderesse et dont un exemple de réalisation correspond au préambule de la revendication 1 prévoit, entre autres mesures, un positionnement précis de la tringle principale permettant d'obtenir un important serrage de la gomme entre ladite tringle et le siège de bourrelet. On caractérise l'efficacité d'une disposition luttant contre le décoincement en mesurant la pression de gonflage à partir et en dessous de laquelle le bourrelet d'une enveloppe de pneumatique se déplace vers le creux de jante lors d'un essai-type. L'essai consiste à lancer un véhicule à une vitesse de 50 km/h dans un virage dont le rayon de courbure est égal à 20 m, avec un raccordement à la portion initiale en ligne droite en forme de clothoïde. Les dispositions connues permettent d'abaisser sensiblement la pression de décoincement par rapport aux performances d'une enveloppe classique montée sur une jante avec saillie circonférentielle. Celles de ces dispositions qui n'apportent pas de modifications simultanées à la jante s'avèrent cependant nettement insuffisantes dans certaines conditions de roulages, ou bien l'efficacité est atteinte au préjudice de la facilité de montage de l'enveloppe sur la jante.

L'objectif de la présente invention est la réalisation d'une enveloppe de pneumatique à carcasse radiale qui se monte sur une jante équipée d'au moins une saillie circonférentielle et dont les bourrelets demeurent sur leur siège de montage jusqu'à une pression de gonflage très réduite.

Un autre objectif de la présente invention est de réaliser une telle enveloppe qui ne nécessite pas de modification de la jante sur laquelle elle se monte.

Le problème à la base de la présente invention consiste à rechercher le moyen de permettre la mobilité axiale de la zone d'ancrage de la ou des nappes de carcasse radiale pour que cette zone puisse suivre les déformations axiales importantes inhérentes à ce type de carcasse, tout en assurant un maintien ferme et une parfaite immobilité axiale de la partie basse du bourrelet qui coopère avec la saillie de retenue prévue sur la jante, et en assurant un montage aisé sur la jante.

L'objet de la présente invention est une enveloppe de pneumatique à carcasse radiale équipée d'un bourrelet comportant deux tringles annulaires dont l'une sert à l'immobilisation de la pointe de bourrelet qui coopère avec la saillie de retenue prévue sur la jante, et l'autre sert de blocage de la première tringle en cas de forte sollicitation axiale, l'utilisation de plusieurs tringles par bourrelet étant connue en soi (voir par exemple US-A 1 548 370).

L'enveloppe de pneumatique selon la présente invention, comportant au moins une nappe de carcasse radiale, dont au moins un bourrelet comporte deux tringles annulaires, destinée à être montée sur une jante dont au moins un siège de bourrelet se prolonge axialement vers l'intérieur par une saillie de retenue axiale dudit bourrelet, est remarquable en ce que ledit bourrelet présente en combinaison les caractéristiques suivantes:

a) la première tringle, de section méridienne de forme quelconque, présente un diamètre inférieur $\varnothing_{i1}$ tel que la longueur de la circonférence $\pi \varnothing_{i1}$ soit comprise entre 0,99 et 1,01 fois la longueur développée maximale qu'une corde tendue autour de ladite saillie puisse prendre dans un plan perpendiculaire à l'axe de rotation,

b) le centre de gravité de la section méridienne de ladite première tringle se situe dans la moitié axialement intérieure de la largeur de la section méridienne du bourrelet,

c) la deuxième tringle, de section méridienne de forme quelconque, présente un diamètre inférieur strictement supérieur au diamètre supérieur de ladite première tringle,

d) ladite deuxième tringle est décalée axialement de manière telle que le centre de gravité de sa section méridienne soit axialement à l'extérieur du centre de gravité de la section méridienne de ladite première tringle, tout en étant axialement à l'intérieur de ladite largeur AB de la section méridienne du bourrelet, de sorte que sous sollicitation axiale, lorsque l'enveloppe de pneumatique se trouve à pression très faible, ladite deuxième tringle est susceptible de se déplacer axialement vers l'intérieur de ladite enveloppe.

Trois modes de réalisation préférentiels sont décrits ci-après et illustrés par les dessins joints:

- la figure 1 représente un bourrelet d'enveloppe de pneumatique selon l'invention,
- la figure 2 représente une variante de réalisation de l'invention,
- la figure 3 représente une autre variante de réalisation de l'invention.

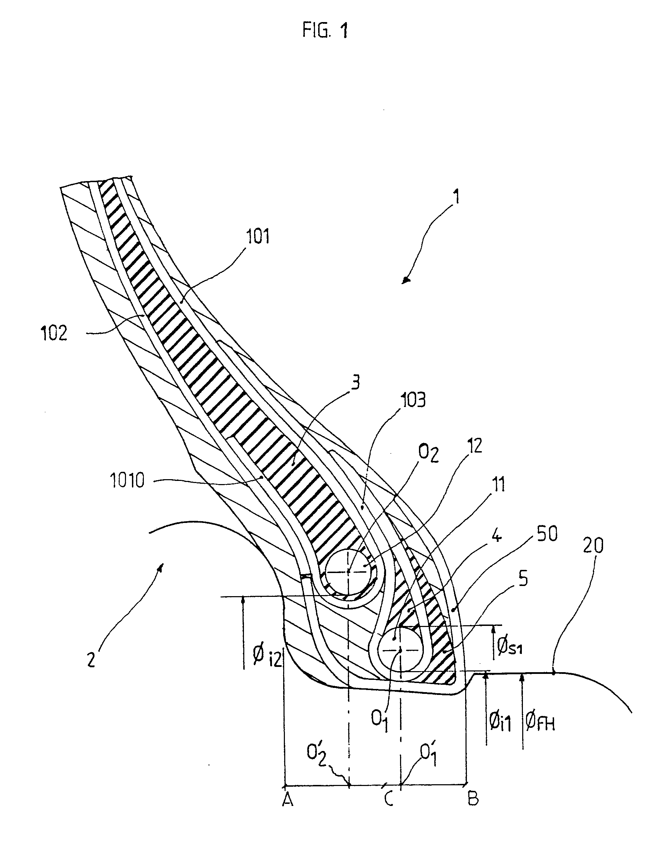

A la figure 1, on voit le bourrelet (1) d'une enveloppe de pneumatique monté sur une jante (2) pourvue d'une saillie (20) du type «flat hump» ou «FH». Le bourrelet comporte une première tringle (11) de section méridienne circulaire. Le diamètre inférieur $\varnothing_{i1}$ de la tringle est tel que la longueur de la circonférence $\pi\varnothing_{i1}$ est égal à 1,01 fois la longueur développée maximale qu'une corde tendue autour de la saillie choisie, de type FH, puisse prendre dans un plan perpendiculaire à l'axe de rotation, à savoir $\pi\varnothing_{i1} = 1,01 \, \pi\varnothing_{FH}$.

Le centre de gravité $O_1$ de la section méridienne de la première tringle (11) se situe axialement à un endroit tel que sa projection orthogonale $O'_1$ sur un segment AB parallèle à l'axe de rotation se situe du côté axialement intérieur du milieu C du segment AB représentant la largeur du bourrelet, ce qui signifie que le centre de gravité de la section méridienne de la première tringle (11) se situe dans la moitié axialement intérieure de la largeur de la section méridienne du bourrelet. La deuxième tringle (12) est de section méridienne identique à la première. Elle est décalée radialement par rapport à la première de manière telle que son diamètre inférieur $\varnothing_{i2}$ soit au moins strictement supérieur, et de préférence supérieur à 1,01 fois le diamètre supérieur $\varnothing_{s1}$ de la première

tringle (11). Elle est décalée axialement de manière telle que la projection orthogonale $O'_2$, sur ledit segment AB, du centre de gravité $O_2$ de sa section méridienne est axialement à l'extérieur de $O'_1$, ce qui signifie que le centre de gravité $O_2$ de la section méridienne de la deuxième tringle (12) est axialement à l'extérieur du centre de gravité $O_1$ de la section méridienne de la première tringle (11).

La première nappe de carcasse (101) est retournée autour de la seconde tringle (12), ce qui réalise l'ancrage d'au moins une nappe de carcasse à ladite deuxième tringle (12). La première tringle (11) est reliée à ladite nappe de carcasse par l'intermédiaire d'une nappe de jonction (103), retournée sous ladite première tringle (11) et appliquée contre la carcasse du côté axialement intérieur de celle-ci.

La carcasse radiale peut en outre comporter une ou plusieurs autres nappes de carcasse, par exemple une nappe (102) appliquée à l'extérieur du retournement (1010) de la nappe de carcasse (101). Les différentes dispositions possibles pour des nappes supplémentaires sont bien connues par l'homme de l'art et ne concernent pas la présente invention.

La pointe du bourrelet (5) qui coopère avec la saillie (20) est réalisée en gomme à haut module d'élasticité, comparable à celui de la gomme utilisée pour les bourrages-tringle (3) et (4); la base du bourrelet est renforcée par une languette (50) de protection.

Lorsque cette enveloppe de pneumatique est sollicitée axialement alors qu'elle se trouve à pression très faible, de l'ordre de 0,1 bar, ou à pression nulle, la demanderesse a constaté que la tringle (12) se déplace axialement vers l'intérieur de l'enveloppe de manière très importante, jusqu'à se situer approximativement à l'aplomb de la saillie (20), et que par contre, la tringle (11) reste rigoureusement immobile axialement.

La demanderesse pense que, par son déplacement axial, la tringle (12) provoque une compression radiale du bourragetringle (4) et de la pointe du bourrelet (5), ce qui participe au blocage de la tringle (11). Dans les bourrelets à une seule tringle, le décoincement se produit lorsque la tringle s'est délacée axialement approximativement à l'aplomb de la saillie (20). La demanderesse pense que, en favorisant la mobilité axiale de la deuxième tringle (12), celle-ci vient, lors de sollicitations axiales importantes, assurer une plus grande immobilité de la première tringle (11) de sorte que la pointe de bourrelet coopère de façon plus efficace avec la saillie (20).

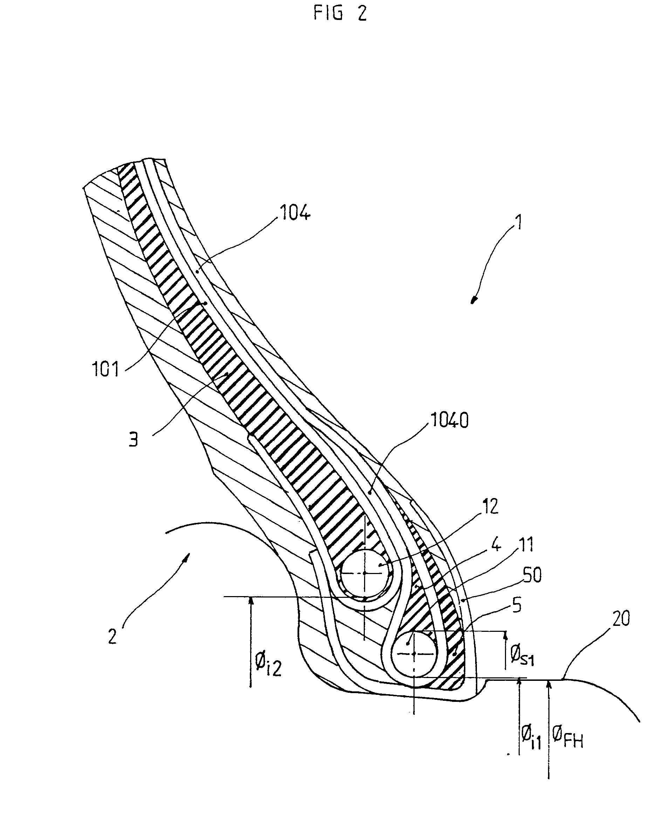

Le bourrelet représenté à la figure 2 diffère de celui qui vient d'être décrit en ce que la nappe de jonction est constituée pr le prolongement (1040) d'une des deux nappes de carcasse (101) et (104). Hormis la manière de relier la première tringle (11) à la nappe de carcasse (101), l'architecture du bourrelet est identique à l'exemple précédent. Les tringles sont disposées de manière identique. On peut donc se reporter à la description précédente pour tous les éléments non spécifiques à cette variante de réalisation.

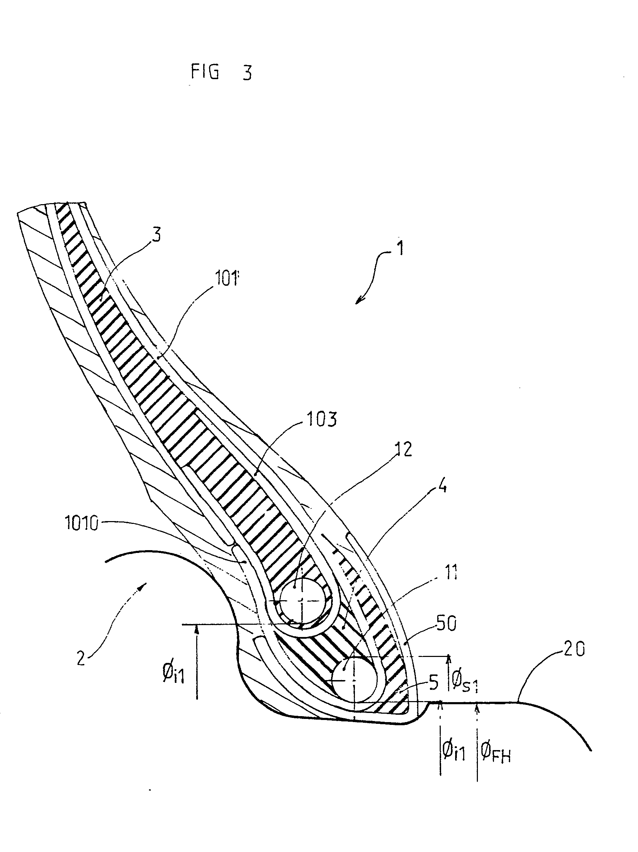

Le mode de réalisation représenté à la figure 3 diffère par l'ancrage de la carcasse radiale. Celle-ci comporte au moins une nappe de carcasse (101) ancrée à l'ensemble formé par les deux tringles (11) et (12): ladite nappe de carcasse (101) passe axialement à l'intérieur des deux tringles (11) et (12) puis son retournement (1010) passe axialement à l'extérieur desdites tringles. On a également prévu une nappe de jonction (103) entourant la deuxième tringle (12), destinée à améliorer la solidarisation de celle-ci à la carcasse radiale.

Afin d'améliorer la précision du positionnement de la première tringle, qui doit être décalée axialement vers l'intérieur du pneumatique, il est possible d'équiper le moule de petites pièces rapportées formant des doigts qui vont pénétrer dans la gomme au cours du moulage à la base et du côté axialement extérieur du bourrelet, et jouer le rôle de butées empêchant la tringle (11) de se déplacer axialement vers l'extérieur.

L'architecture de bourrelet qui vient d'être proposée permet de lutter de manière très efficace contre le décoincement sans devoir apporter de modification à la jante. Ainsi, tout profil de jante peut être utilisé, pourvu que l'extrémité axialement intérieure du siège de bourrelet se termine par une saillie formant butée de retenue axiale du bourrelet. Si l'on cherche simplement à augmenter l'aptitude de l'enveloppe de pneumatique à ne pas décoincer en virage négocié lorsque la pression de gonflage est très insuffisante, l'architecture de bourrelet proposée peut n'être adoptée que d'un seul côté de l'enveloppe, qui doit bien sûr être le côté extérieur du véhicule équipé. Cependant, lorsque l'on désire élever le niveau de performances pour permettre un roulage de fortune à pression nulle, les deux bourrelets doivent présenter la configuration selon l'invention, chacun coopérant avec une saillie de retenue prévue sur la jante.

Les meilleures performances en lutte contre le décoincement sont obtenues avec une enveloppe pour laquelle le diamètre inférieur $\varnothing_{i1}$ de la première tringle est tel que la longueur de la circonférence $\pi\varnothing_{i1}$ soit inférieure à 1,005 fois la longueur développée maximale qu'une corde tendue autour de la saillie choisie puisse prendre dans un plan perpendiculaire à l'axe de rotation. Le montage d'une enveloppe de pneumatique selon l'invention se fait sans difficulté sous le seul effet de la pression de gonflage. Le démontage reste pratiquement aussi facile que celui d'une enveloppe usuelle lorsque le diamètre $\varnothing_{i1}$ est tel que $\pi\varnothing_{i1}$ soit supérieur à 0,995 fois la longueur développée maximale qu'une corde tendue autour de la saillie choisie puisse prendre dans un plan perpendiculaire à l'axe de rotation. En-dessous de cette valeur, le démontage, quoique plus difficile, reste possible.

L'essai-type décrit en préambule a permis de relever des pressions de décoincement voisines de 0 bar pour des enveloppes ayant deux bourrelets identiques, constitués selon l'un ou l'autre des exemples de réalisation. Toutes autres choses égales par ailleurs, les pressions de décoincement des enveloppes usuelles sont voisines de 1 bar. D'autre part, la pression à laquelle les bourrelets se positionnent sur leurs sièges est comparable à celle relevée pour des enveloppes usuelles sur une même jante, à savoir 2,5 bars pour une jante de type «FH».

**Revendications**

1. Enveloppe de pneumatique comportant au moins une nappe de carcasse radiale dont au moins un bourrelet comporte deux tringles annulaires, destinée à être montée sur une jante dont au moins un siège de bourrelet se prolonge axialement vers l'intérieur par une saillie de retenue axiale dudit bourrelet, caractérisée en ce que
a) la première tringle, de section méridienne de forme quelconque, présente un diamètre inférieur $\varnothing_{i1}$ tel que la longueur de la circonférence $\pi\varnothing_{i1}$ soit comprise entre 0,99 et 1,01 fois la longueur développée maximale qu'une corde tendue autour de ladite saillie puisse prendre dans un plan perpendiculaire à l'axe de rotation
b) le centre de gravité de la section méridienne de ladite première tringle se situe dans la moitié axialement intérieure de la largeur AB de la section méridienne du bourrelet,
c) la deuxième tringle, de section méridienne de forme quelconque, présente un diamètre inférieur $\varnothing_{i2}$ strictement supérieur au diamètre supérieur $\varnothing_{s1}$ de ladite première tringle,
d) ladite deuxième tringle est décalée axialement de manière telle que le centre de gravité de sa section méridienne soit axialement à l'extérieur du centre de gravité de la section méridienne de ladite première tringle, tout en étant axialement à l'intérieur de ladite largeur AB de la section méridienne du bourrelet, de sorte que sous sollicitation axiale, lorsque l'enveloppe de pneumatique se trouve à pression très faible, ladite deuxième tringle est susceptible de se déplacer axialement vers l'intérieur de ladite enveloppe.

2. Enveloppe de pneumatique selon la revendication 1, caractérisée en ce que le diamètre inférieur $\varnothing_{i2}$ de la deuxième tringle est supérieur à 1,01 fois le diamètre supérieur $\varnothing_{s1}$ de la première tringle.

3. Enveloppe de pneumatique selon l'une des revendications 1 ou 2, caractérisée en ce que le diamètre inférieur $\varnothing_{i1}$ de la première tringle est tel que la longueur de la circonférence $\pi\varnothing_{i1}$ est comprise entre 0,995 fois et 1,005 fois la longueur développée maximale qu'une corde tendue autour de ladite saillie puisse prendre dans un plan perpendiculaire à l'axe de rotation.

4. Enveloppe de pneumatique selon l'une des revendications 1 à 3, caractérisée en ce qu'au moins une nappe de carcasse est ancrée à ladite deuxième tringle et au moins une nappe de jonction relie ladite première tringle à ladite nappe de carcasse.

5. Enveloppe de pneumatique selon la revendication 4 caractérisée en ce que ladite nappe de jonction relie la première tringle à ladite nappe de carcasse en passant du côté axialement intérieur de ladite deuxième tringle.

6. Enveloppe de pneumatique selon l'une des revendications 1 à 3, caractérisée en ce qu'au moins une nappe de carcasse est ancrée à ladite première tringle et au moins une nappe de jonction relie ladite deuxième tringle à ladite nappe de carcasse.

7. Enveloppe du pneumatique selon l'une des revendications 1 à 3, caractérisée en ce qu'au moins une nappe de carcasse est ancrée à l'ensemble formé par les deux tringles.

8. Enveloppe de pneumatique selon la revendication 7, caractérisée en ce que la deuxième tringle est entourée par une nappe de jonction.

9. Enveloppe de pneumatique selon l'une quelconque des revendications 1 à 8, caractérisé en ce que les deux bourrelets présentent la même configuration.

**Patentansprüche**

1. Luftreifenhülle mit zumindest einer Radialkarkassenlage, bei der zumindest ein Wulst zwei ringförmige Kerne aufweist, dazu bestimmt, auf einer Felge montiert zu werden, bei der zumindest ein Wulstsitz axial ins Innere durch einen axialen Haltevorsprung für den genannten Wulst verlängert ist, dadurch gekennzeichnet, dass
a) der erste Kern, dessen Meridianschnitt beliebige Form haben kann, einen inneren Durchmesser $\varnothing_{i1}$ aufweist, so dass seine Umfangslänge $\pi\varnothing_{i1}$ zwischen 0,99 und 1,01 mal der maximalen Abwicklungslänge eines Bandes ist, das in einer Ebene rechtwinkelig auf die Rotationsachse um den genannten Vorsprung gewickelt ist,
b) der Schwerpunkt des Meridianschnittes des genannten ersten Kernes sich in der axial inneren Hälfte der Breite AB des Meridianschnittes des Wulstes befindet,
c) der zweite Kern, dessen Meridianschnitt beliebige Form aufweisen kann, einen inneren Durchmesser $\varnothing_{i2}$ aufweist, der strikt grösser als der Aussendurchmesser $\varnothing_{s1}$ des genannten ersten Kernes ist,
d) der genannte zweite Kern axial so verschoben ist, dass der Schwerpunkt seines Meridianschnittes axial ausserhalb des Schwerpunktes des Meridianschnittes des genannten ersten Kernes ist, wobei er axial innerhalb der genannten Breite AB des Meridianschnittes des Wulstes liegt, so dass unter axialen Beanspruchungen, wenn die Luftreifenhülle sehr geringen Druck aufweist, der genannte zweite Kern in der Lage ist, sich axial sich ins Innere des genannten Luftreifens zu verschieben.

2. Luftreifenhülle nach Anspruch 1, dadurch gekennzeichnet, dass der innere Durchmesser $\varnothing_{i2}$ des zweiten Kernes grösser als das 1,01fache des äusseren Durchmessers $\varnothing_{s1}$ des ersten Kernes ist.

3. Luftreifenhülle nach einem der Ansprüche 1 oder 2, dadurch gekennzeichnet, dass der innere Durchmesser $\varnothing_{i1}$ des ersten Kernes so gewählt ist, dass die Umfangslänge $\pi\varnothing_{i1}$ zwischen dem 0,995fachen und dem 1,005fachen der maximalen Abwicklungslänge eines Bandes ist, dass in einer Ebene rechtwinkelig auf die Rotationsachse um den genannten Vorsprung geschlungen ist.

4. Luftreifenhülle nach einem der Ansprüche 1 bis 3, dadurch gekennzeichnet, dass zumindest eine Karkassenlage am zweiten Kern verankert ist und zumindest eine Verbindungslage den genannten ersten Kern mit der Karkassenlage verbindet.

5. Luftreifenhülle nach Anspruch 4, dadurch gekennzeichnet, dass die Verbindungslage den ersten Kern mit der genannten Karkassenlage verbindet, indem sie an der axial inneren Seite des genannten zweiten Kernes vorbeigeht.

6. Luftreifenhülle nach einem der Ansprüche 1 bis 3, dadurch gekennzeichnet, dass zumindest eine Karkassenlage am genannten ersten Kern verankert ist und dass zumindest eine Verbindungslage den genannten zweiten Kern mit der Karkassenlage verbindet.

7. Luftreifenhülle nach einem der Ansprüche 1 bis 3, dadurch gekennzeichnet, dass zumindest eine Karkassenlage an dem durch die beiden Kerne gebildeten Ensemble verankert ist.

8. Luftreifenhülle nach Anspruch 7, dadurch gekennzeichnet, dass der zweite Kern von einer Verbindungslage umhüllt ist.

9. Luftreifenhülle nach einem der Ansprüche 1 bis 8, dadurch gekennzeichnet, dass die beiden Wülste den gleichen Aufbau aufweisen.

**Claims**

1. A pneumatic tyre having at least one radial carcass ply and at least one bead containing two bead rings, the tyre being mountable on a rim having at least one bead seat which is extended axially inward by a hump for the axial retention of the bead, characterized by the fact that
a) the first bead ring, of a meridian section of any shape, has a lower diameter $\varnothing_{i1}$ such that the length of the circumference $\pi\varnothing_{i1}$ is between 0.99 times and 1.01 times the maximum developed lenght which a cord stretched around the hump can assume in a plane perpendicular to the axis of rotation,
b) the center of gravity of the meridian section of first bead ring is located in the axially inner half the width AB of the meridian section of the bead,
c) the second bead ring, of a meridian section of any shape, has a lower diameter $\varnothing_{i2}$ which is greater than the upper diameter $\varnothing_{s1}$ of the first bead ring,
d) the center of gravity of the meridian section of the second bead ring is located axially outward of the center of gravity of the meridian section of the first bead ring, and is simultaneously located within said width AB of the meridian section of the bead, whereby, upon axial stress on a tyre having a very low pressure, said second bead ring is apt to move axially towards the inside of the tyre.

2. A pneumatic tyre according to claim 1, characterized by the fact that the lower diameter $\varnothing_{i2}$ of the second bead ring is greater that 1.01 times the upper diameter $\varnothing_{s1}$ of the first bead ring.

3. A pneumatic tyre according to one of the claims 1 or 2, characterized by the fact that the lower diameter $\varnothing_{c1}$ of the first bead ring is such that the length of the circumference $\pi\varnothing_{ii}$ is between 0.995 times and 1.005 times the maximum developed length which a cord stretched around th hump can assume in a plane perpendicular to the axis of rotation.

4. A pneumatic tyre according to any of claims 1 to 3, characterized by the fact that at least one radial carcass ply is anchored to the second bead ring and at least one connecting ply connects the first bead ring to said radial carcass ply.

5. A pneumatic tyre according to claim 4, characterized by the fact that the connecting ply connects the first bead ring to said radial carcass ply by passing over the axial inner side of the second bead ring.

6. A pneumatic tyre according to any of claims 1 to 3, characterized by the fact that at least one radial carcass ply is anchored to the first bead ring and at least one connecting ply connects the second bead ring to said radial carcass ply.

7. A pneumatic tyre according to any of claims 1 to 3, characterized by the fact that at least one radial carcass ply is anchored to the assembly formed by the two bead rings.

8. A pneumatic tyre according to claim 7, characterized by the fact that the second bead ring is surrounded by a connecting ply.

9. A pneumatic tyre according to claim 1, characterized by the fact that the two beads have the same configuration.

FIG. 1

FIG 2

104

101

3

2

1

1040

12

4

11

50

5

20

$\emptyset_{i2}$

$\emptyset_{S1}$

$\emptyset_{i1}$

$\emptyset_{FH}$

FIG 3